# EUROPEAN PATENT APPLICATION

(11) **EP 0 669 285 A1**
(43) Date of publication of application: **30.08.1995**
(21) Application number: 94402916.4
(22) Date of filing: 16.12.1994
(51) Int. Cl.: C02F 1/48, C02F 1/00

(54) **Device for preparation of hexagonal water**

(30) Priority: 18.02.1994 KR 9402954; 30.09.1994 KR 9425056
(71) Applicant: LG ELECTRONICS INC., Seoul (KR)
(72) Inventor: Hwang, Gui Nan, Kyungsangnam-Do (KR); Lee, Jong Wook, Kyungsangnam-Do (KR); Kwon, Yong Chol, Kyungsangnam-Do (KR)
(74) Representative: Fort, Jacques

(57) **Abstract**

A device for preparation of hexagonal water through magnetization of fresh water is disclosed. The device is equipped in a conventional home appliance, such as a refrigerator, thus to more readily prepare and serve the healthy hexagonal water. The device has a holder, a water container placed in the holder, water magnetizing means for magnetizing the water of the water container provided on a side of the water container, water whirling means for whirling the magnetized water by giving the water a velocity and for promoting magnetization of the water and change of the water into the hexagonal water, and means for discharging the hexagonal water from the water container to the outside of the home appliance.

## Description

### BACKGROUND OF THE INVENTION

### Field of the Invention

The present invention relates in general to preparation of healthful hexagonal water and, more particularly, to a device for preparation of the hexagonal water through magnetization of fresh water, the device heing equipped in a conventional home appliance such as a refrigerator, thus to more readily preparing and serving the healthful hexagonal water.

### Description of the Prior Art

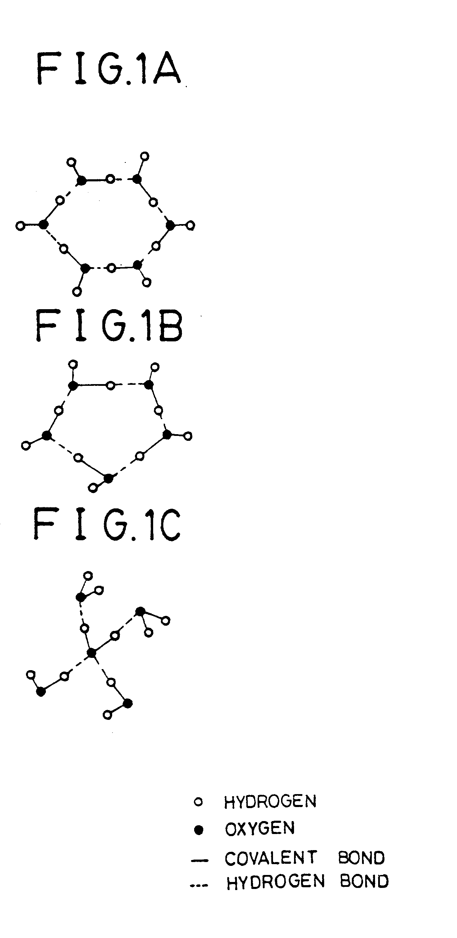

Waters are generally classified in accordance with their molecular structures into several types, that is, water of hexagonal ring structure, water of pentagonal ring structure and water of pentachain structure as shown in Figs. 1A to 1C. General waters include therein all the above three molecular structures respectively. However, both the hexagonal ring structure and the pentagonal ring structure of the above three molecular structures are basic structures of waters.

The waters are typically named by their majority structures of the three structures. For example, the water whose majority structure is the hexagonal ring structure is named as the hexagonal molecular structure water or the hexagonal water. The waters are different from each other in their healthful effects in accordance with ratio of the molecular structures included in the water.

For example, the hexagonal water has an excellent healthful effect on prevention of geriatric diseases such as cancers, constipation, diabetes and gastroenteric trouble. Meanwhile, the pentagonal water has an excellent effect on skin beauty, treatment of skin diseases and bleaching. The pentagonal water is, therefore, not suitable for used as potable water, but suitable for used as skin moisturizing water.

In addition, it has been noted that the hexagonal water has a rich amount of dissolved oxygen in comparison with general waters and plants grown using the hexagonal water are fast-growing and rich in amino acid components.

The bio-water about healthy human cell comprises three layers, that is, a Z-Iayer directly hydrated into the human cell, an X-layer of general water and a Y-layer interposed between the Z-Iayer and the X-layer. Of the above three layers of bio-water, the majority structure of the Z-Iayer directly hydrated into the human cell is the hexagonal ring structure, while the other layers, that is, the Y-layer and the X-layer, include pentagonal ring structure and pentachain structure more than those of the Z-layer. Particularly, the waters about a diseased cell such as about a cancerous cell mainly include the water of pentagonal ring structure and the water of pentachain structure. The molecular structures of the waters about the diseased cell are broken and free drift.

There have been proposed and used several methods for preparing the hexagonal water. That is, the hexagonal water may be prepared by cooling the fresh water, magnetizing the fresh water, ionizing the fresh water or alkalizing the fresh water.

The method for preparing the hexagonal water by cooling the fresh water aims at the fact that cold water includes a large quantity of hexagonal ring molecular structure and, furthermore, that almost all the molecular structures of supercooled water of temperature of -30 _{°} C are the hexagonal ring structures.

Meanwhile, the method for preparing the hexagonal water by ionizing the fresh water aims at the fact that the anion water includes a large quantity of hexagonal ring molecular structure when the fresh water is ionized and divided into anion water and cation water.

The method for preparing the hexagonal water by alkalizing the fresh water aims at the fact that carbon dioxide C0₂ of the water volatilizes into the air when contacting the fresh water with air, thus to reduce the concentration of carbon dioxide C0₂ of the water but to increase the hydrogen concentration pH of the water.

On the other hand, the method for preparing the hexagonal water by magnetizing the fresh water aims at the fact that the fresh water is applied with a strong magnetic field not less than 1000 Gauss, thus to be changed in its molecular structure into the hexagonal ring structure. However, in this magnetizing method for preparation of hexagonal water, careful attention must be paid to the fact that the fresh water can be most readily magnetized and changed into the hexagonal water when the water molecules flow at a velocity in a direction perpendicular to the strong magnetic field. The fresh water will not be magnetized and changed into the hexagonal water when the water molecules flow in a direction parallel to the magnetic field.

### SUMMARY OF THE INVENTION

It is, therefore, an object of the present invention to provide a device for preparation of hexagonal water through magnetization of fresh water, which device is equipped in a conventional home appliance such as a refrigerator, thus to more readily prepare and serve the healthful hexagonal water and to promote human health, for example, prevention of geriatric diseases such as cancers, constipation, diabetes and gastroenteric trouble.

In order to accomplish the above object, a device for preparation of hexagonal water in accordance with the present invention comprises: a holder placed in a side of the interior of a home appliance such as a refrigerator or a water cooling/heating apparatus, a water container placed in the holder, water magnetizing means for magnetizing the water of the water container provided on a side of the water container, water whirling means for whirling the magnetized water by giving the water a velocity and for promoting magnetization of the water and change of the water into the hexagonal water, and means for discharging the hexagonal water from the water container to the outside of the home appliance.

### BRIEF DESCRIPTION OF THE DRAWINGS

The above and other objects, features and other advantages of the present invention will be more clearly understood from the following detailed description taken in conjunction with the accompanying drawings, in which:
Figs. 1A to 1 C are view of a hexagonal ring molecular structure of water, a pentagonal ring molecular structure of water and a pentachain molecular structure of water respectively;
Fig. 2 is a perspective view of a refrigerator equipped with a hexagonal water preparation device in accordance with a first embodiment of the present invention;
Fig. 3 is an exploded perspective view of the hexagonal water preparation device of the first embodiment of the invention;
Fig. 4 is a sectional view of the hexagonal water preparation device of Fig. 3, showing constructions of water magnetizing means, water whirling means and hexagonal water discharging means of the device;
Fig. 5A is a sectional view showing a state of water supply means of the device of Fig. 3 when a pair of main water containers are separated from an auxiliary water container;
Fig. 5B is a sectional view showing a state of the water supply means of the device of Fig. 3 when the pair of main water containers are set on the auxiliary water container;
Fig. 6 is an exploded perspective view of another embodiment of a main water container used in the device of Fig. 3;
Fig. 7 is a sectional view of a whirling magnet rotatably fitted over a center shaft extending upward from the bottom of one of the main water containers of the device of Fig. 3;
Fig. 8A is a plan view showing the whirling magnet provided in one of the main water containers of the device of Fig. 3;
Fig. 8B is a plan view showing another embodiment of a whirling magnet provided in one of the main water container of the device of Fig. 3;
Fig. 9A is a plan view showing a drive permanent magnet of the water whirling means of the device of Fig. 3;

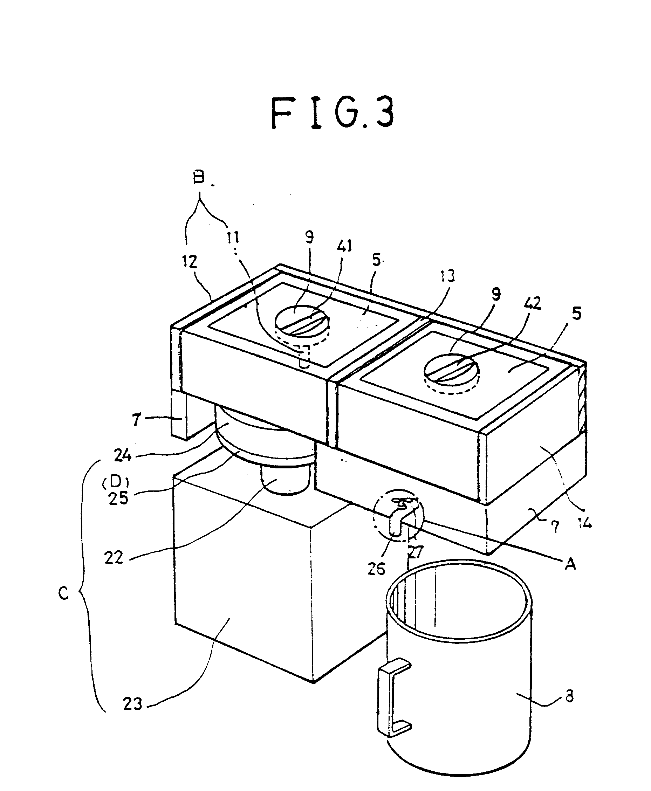

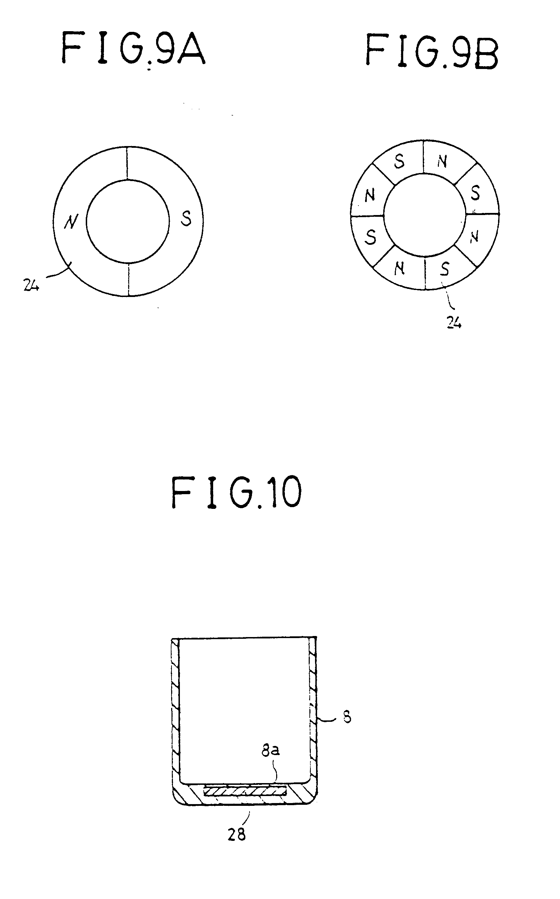

Fig. 9A is a plan view showing another embodiment of a drive permanent magnet of the water whirling means of the device of Fig. 3;
Fig. 10 is a sectional view of a cup of the device of Fig. 3;

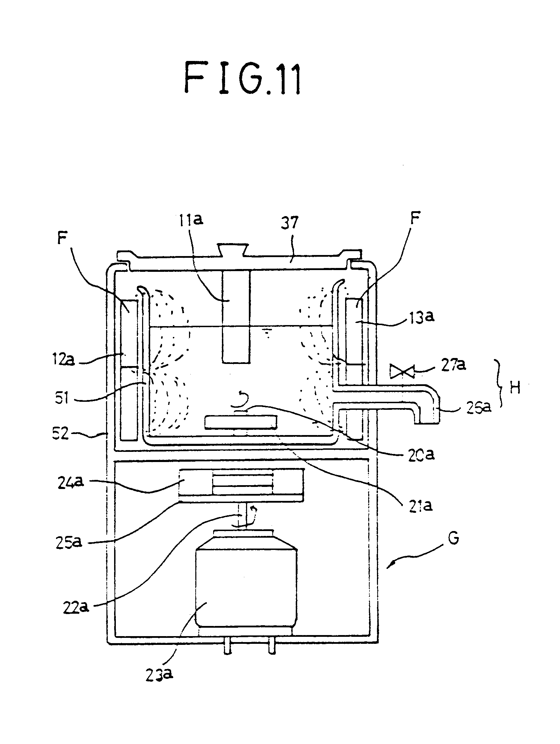

Fig. 11 is a sectional view of a hexagonal water preparation device in accordance with a second embodiment of the present invention;
Fig. 12 is a schematic view of a water container of a hexagonal water preparation device in accordance with a third embodiment of the present invention;

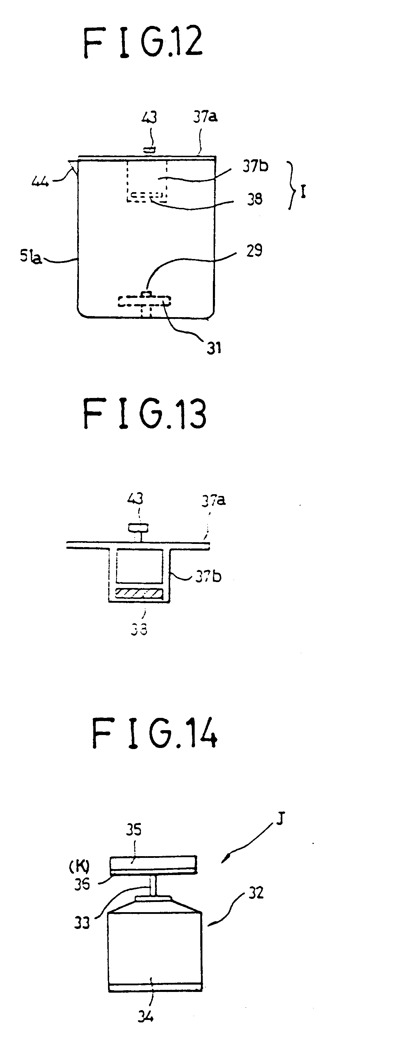

Fig. 13 is a view showing a construction of a magnet holder of a detachable lid of the water container of Fig. 12;
Fig. 14 is a sectional view of water whirling means of the device of Fig. 12;

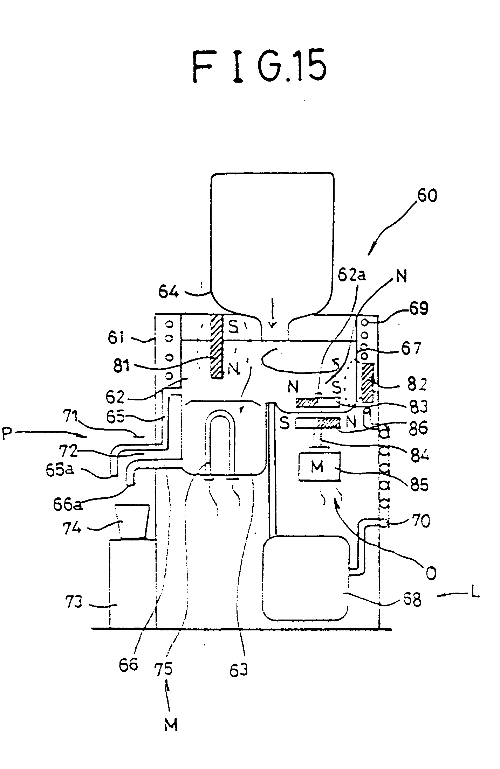

Fig. 15 is a sectional view of a water cooling/heating apparatus equipped with a hexagonal water preparation device in accordance with a fourth embodiment of the present invention; and

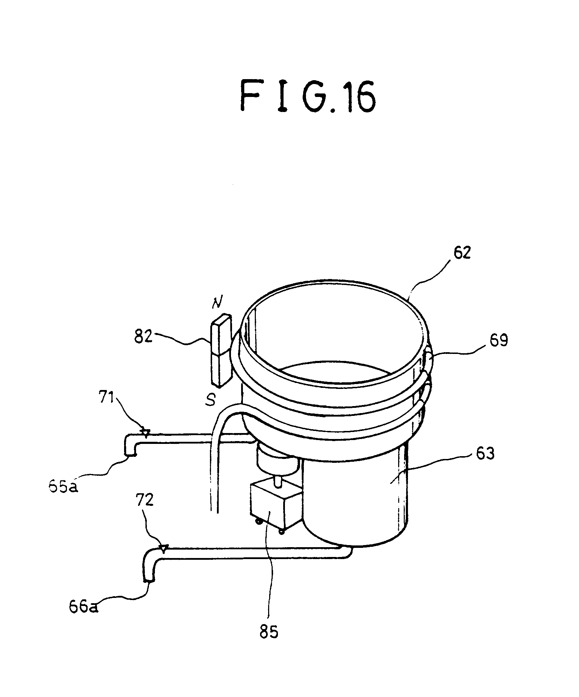

Fig. 16 is an enlarged perspective view showing a construction of the hexagonal water preparation device of Fig. 15.

### DESCRIPTION OF THE PREFERRED EMBODIMENTS

In the accompanying drawings, there are shown hexagonal water preparation devices in accordance with first to fourth embodiments of the invention. Each of the hexagonal water preparation devices according to the embodiments prepares and serves the hexagonal water by magnetizing the fresh water using magnets.

In the first to third embodiments, the hexagonal water preparation devices are characterized in that they are equipped in typical refrigerators.

Referring first to Fig, 2, there is shown a refrigerator equipped with a hexagonal water preparation device in accordance with the first embodiment of the present invention. As shown in this drawing, the refrigerator has a cooling chamber 1 and a freezing chamber 3. The chambers 1 and 3 are defined in the lower section and in the upper section of the interior of a refrigerator housing 1 respectively.

The cooling chamber door 2 of the refrigerator is provided with the hexagonal water preparation device according to the first embodiment of the invention. The hexagonal water preparation device includes a holder 4 which is mounted to the upper side section of the interior surface of the cooling chamber door 2. The holder 4 is a right-angled hexahedral body which opens to the front, to the back and to the top. A pair of support protrusions are interiorly formed on the opposed side walls of the holder 4. The holder 4 also includes a vertical partition 4a which vertically extends upward from the center of the bottom of the holder 4 to a position level with the support protrusions.

Placed in the upper section of the interior of the holder 4 are a pair of main water containers 5 of right-angled hexahedral bodies provided with their detachable lids 9. A rod type permanent magnet 11 for magnetizing the water inside the main water containers 5 is orthogonally rotatably coupled to the center of the interior surface of the detachable lid 9 of either main container 5, for example, of a first main container 5 as shown in Fig. 3. An auxiliary water container 7 having a predetermined shape is placed in a side section of the interior of the holder 4 under the two main water containers 5.

In the above first embodiment, the hexagonal water preparation device has two main water containers 5 of the same type as well as one rod type permanent magnet 11, which magnet 11 is coupled to the interior surface of the lid 9 of the first main container 5. However, it should be understood that the hexagonal water preparation device of the invention may have two permanent magnets 11 respectively coupled to the centers of the interior surfaces of the two lids 9. As a further alternative, the hexagonal water preparation device may have only one main water container 5.

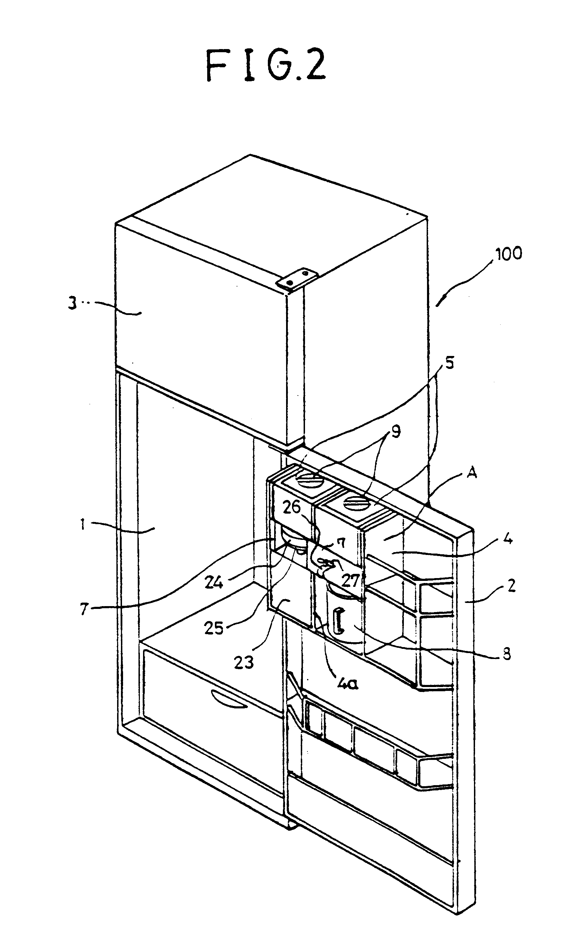

As shown in Figs. 2 and 3, hexagonal water discharging means "A" is provided on the auxiliary water container 7 placed under the second main container 5. The water discharging means "A" is directed to the interior of the cooling chamber 1.

The hexagonal water discharging means "A" comprises a water discharging pipe 26 and a water discharging control valve 27, which pipe 26 extends from the front wail of the auxiliary water container 7, while which control valve 27 is mooted to the pipe 26.

Of course, it should be understood that there exist a variety of different valve configurations which yield the same result as that of the control valve 27 without affecting the functioning of this invention.

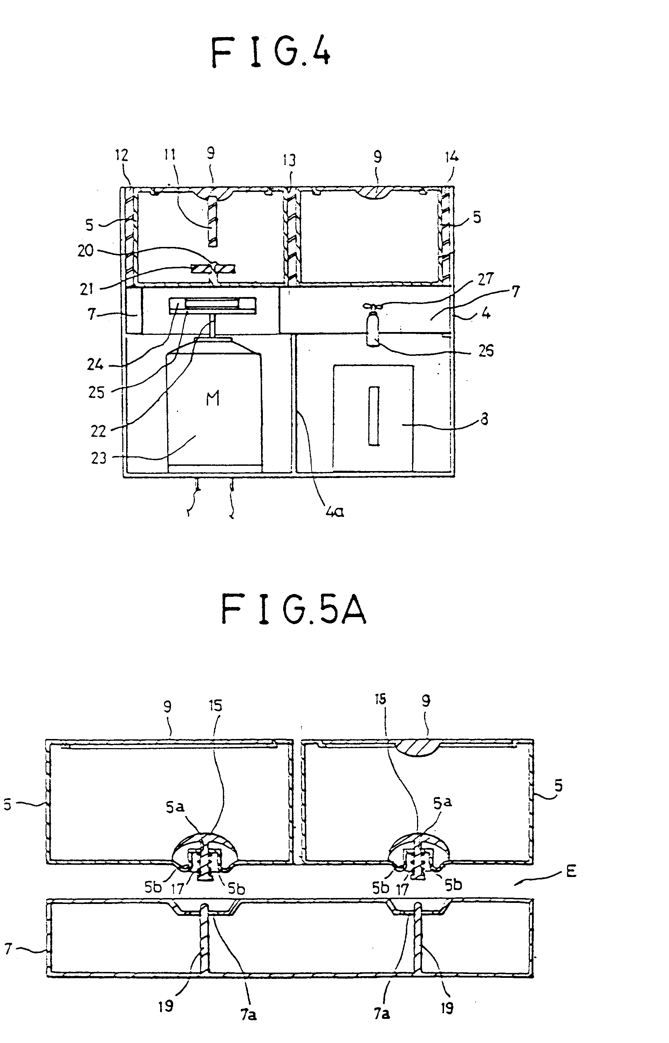

The hexagonal water preparation device also includes water magnetizing means "B" about the main water containers 5. The magnetizing means "B" includes at least one permanent magnet of the plate type interposed between the outside surfaces of the two main container 5 and their associated side walls of the holder 4 and includes at least one permanent magnet of the plate type interposed between the two main containers 5. In the first embodiment shown in Figs. 3 and 4, two permanent magnets 12 and 14 are interposed between the outside surfaces of the two main container 5 and their associated side walls of the holder 4 respectively, while a permanent magnet 13 is interposed between the two main containers 5.

Of course, it should be understood the positions of the permanent magnets 12, 13 and 14 may be changed without affecting the functioning of this invention.

In order to give a velocity to the magnetized water of the main container 5 and to whirl the magnetized water at the velocity and to promote magnetization of the water and change of the molecular structure of the water into the hexagonal ring structure, water whirling means "C" is provided in hexagonal water preparation device.

As shown in Figs. 3, 4 and 7, the water whirling means "C" includes a center shaft 20 vertically extending upward from the bottom of the first main container 5 having the rod type permanent magnet 11. The shaft 20 has a top head provided by forming an annular groove in the upper section of the shaft 20. A whirling magnet 21 is rotatably fitted over the annular groove of the center shaft 20. The water whirling means "C" also includes a drive motor 23 having a rotating shaft 22, which motor 23 is placed on the bottom of the holder 4 under the first main container 5. A disc type drive permanent magnet 24 is coupled to the top end of the rotating shaft 22 of the motor 23. The drive permanent magnet 24 is adapted for rotating the whirling magnet 21 due to magnetic attraction and magnetic repulsion generated between the whirling magnet 21 and the drive magnet 24.

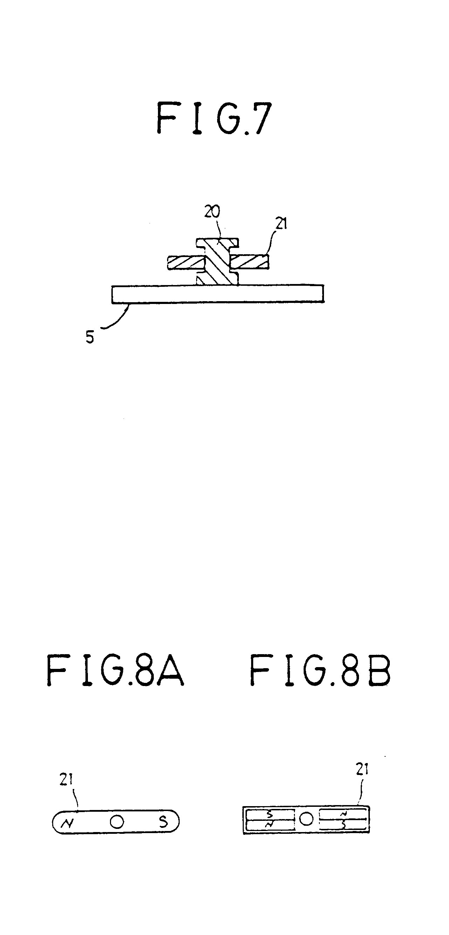

Synthetic resin such as plastic is coated on both the rod type permanent magnet 11 and the whirling magnet 21 in order to keep the magnets 11 and 21 from rusting. As shown in Figs. 8A and 8B, the whirling magnet 21 may be selected from varieties of magnets such as monopolar magnets and bipolar magnets. In the same manner, the drive permanent magnet 24 may be selected from varieties of magnets such as monopolar magnets and bipolar magnets as shown in Figs. 9A and 9B.

Shielding means "D" is fitted over the rotating shaft 22 under the drive permanent magnet 24. In the first embodiment, the shielding means "D" for shielding the magnetic force of the drive permanent magnet 24 from affecting the surroundings except for the whirling magnet 21 is an aluminum plate 25.

A cup 8 is placed on the bottom of the holder 4 under the hexahedral water discharging means "A". As shown in Fig. 10, the interior of the bottom 28 of the cup 8 is provided with a permanent magnet 28 for keeping the hexagonal ring molecular structure of the hexagonal water therein.

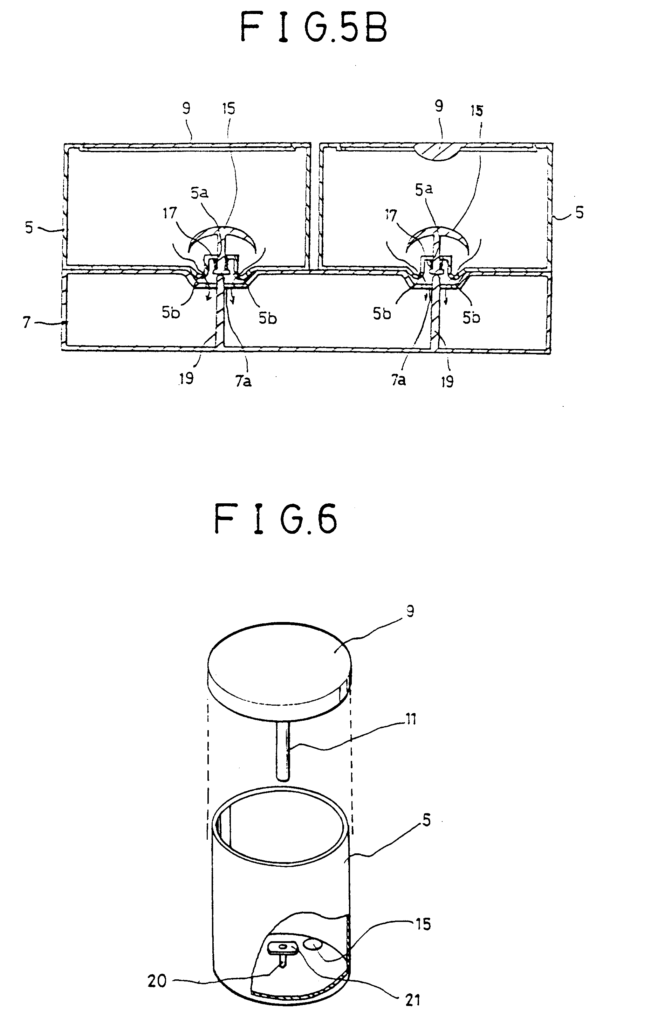

The hexagonal water preparation device further includes water supply means "E" for naturally supplying the water of the main containers 5 to the auxiliary container 7 when the main containers 5 are set on the auxiliary container 7 as shown in Figs. 5A and 5B.

As shown in Figs. 5A and 5B, the water supply means "E" includes a pair of umbrella cocks 15 which are movably fitted into shaft holes 5a formed on the rear bottoms of the main containers 5 respectively. Each umbrella cock 15 selectively open or close a plurality of water outlets 5b circularly provided about the shaft hole 5a of an associated main container 5. A biasing member 17 such as a compression coil spring is fitted over a cock shank of each cock 15 and stopped by an associated shaft hole 5a at its top end, thus to bias each cock 15 downward. The auxiliary container 7 has a pair of water inlets 7a on predetermined positions of its top wall, which positions correspond to the water outlets 5b of the main containers 5. The water inlets 7a communicate with the water outlets 5b of the main containers 5. A pair of pushing rods 19 vertically extend upward from the bottom of the auxiliary container 7, so that the pushing rods 19 cooperate with the bottoms of the umbrella cocks 15 respectively.

In Fig. 3, the reference numerals 41 and 42 denote handles of the detachable lids 9 of the main containers 5 respectively.

The operational effect of the hexagonal water preparation device of the first embodiment will be described hereinbelow.

The main containers 5 are separated from the holder 4 of the cooling chamber door 2 and charged with fresh water, such as city water, through the openings formed by separation of the lids 9 from the containers 5.

When charging the fresh water in the main containers 5 separated from the holder 4 of the cooling chamber door 2, the umbrella cocks 15 of the main containers 5 are fully biased downward by their biasing members 17 as shown in Fig. 5A, so that the umbrella cocks 15 tightly close the water outlets 5b of the main containers 5, thus to prevent water leakage out of the main containers 5.

After charging the fresh water in the main containers 5, the main containers 5 are simply set on their predetermined positions on the auxiliary water container 7 in the holder 4 as shown in Fig. 5B. At this time, the bottom ends of the umbrella cocks 15 of the main containers 5 come into contact with and are pushed upward by the pushing rods 19 of the auxiliary container 7 respectively, so that the cocks 15 move upward against the spring forces of the biasing members 17 and open the water outlets 5b of the main containers 5.

Therefore, the fresh water of the main containers 5 is introduced into the auxiliary container 7 through the water outlets 5b of the main containers 5 and through the water inlets 7a of the auxiliary container 7. In this case, as the permanent magnet 11 is provided on the interior surface of the lid 9 of the first main container 5 and the permanent magnets 12, 13 and 14 are placed about the two main containers 5, the water inside the main containers 5 is magnetized by the permanent magnets 11, 12, 13 and 14 prior to its introduction into the auxiliary container 7. Therefore, the molecular structure of the water in the containers 5 is changed into the hexagonal ring structure and partially change the water into the hexagonal water.

Before the water, which water was partially changed into the hexagonal water by the action of the permanent magnets 11, 12, 13 and 14, is introduced from the main containers 5 into the auxiliary container 7, the amount of and the weight of the water are sensed by a sensor (not shown). The sensor, after sensing the amount of and the weight of the water, makes the drive motor 23 be allied with electric power, thus to rotate the rotating shaft 22 of the motor 23. As a result of rotation of the rotating shaft 22, the drive permanent magnet 24 coupled to the rotating shaft 22 is rotated, thus to cause the whirling magnet 21 of the first main container 5 to be rotated about the shaft 20 due to magnetic attraction and magnetic repulsion generated between the whirling magnet 21 and the drive magnet 24.

At this time, the whirling magnet 21 is applied with upward thrusting force and intends to go up the shaft 20 so as to be separated from the shaft 20 due to the magnetic attraction and the magnetic repulsion generated between the magnets 21 and 24. However, the whirling magnet 21 is limited in its going-up motion by the top head of the shaft 20, so that the whirling magnet 21 is not separated from the shaft 20 but always affected by the magnetic force of the drive permanent magnet 24.

Here, it should be understood that the drive motor 23 may be not indirectly applied with the electric power by the action of the sensor, but may be directly optionally applied with the electric power by a user.

As the whirling magnet 21 is rotated as described above, the water in the first main container 5 whirls at a whirling velocity in the first main container 5. Hence, the whirling water in the main containers 5 is continuously applied with a magnetic force F of the magnetizing means "B", that is, the permanent magnets 11, 12, 13 and 14 placed about the main containers 5, while keeping predetermined angles relative to the magnetic fields of the permanent magnets 11, 12, 13 and 14. Here, the magnetic force F is represented by the equation F = BQV sine, wherein B is a magnetic flux density, V is a whirling velocity of the water, Q is electric charge and 0 is an angle formed between the whirling water and a magnetic field of each permanent magnet 11, 12, 13 or 14. Therefore, the molecular structures of the water, whirling in the containers 5, are more changed into the hexagonal ring structures, thus to let the water become the hexagonal water.

At this time, the angle between the whirling water and the magnetic field of a permanent magnet 11, 12, 13 or 14 of the magnetizing means "B" will be closer to the right angle when the containers 5 have lower temperatures and the whirling magnet 21 is rotated at a higher velocity. In this case, the hexagonal water preparation rate of the device will be increased.

As the shielding means "D" such as the aluminum plate 25 is fitted over the rotating shaft 22 of the drive permanent magnet 24, the magnetic force of the magnet 24 is prevented from affecting surrounding elements except for the whirling magnet 21.

In the present invention, it should be understood that the shielding means "D" is not limited to the aluminum plate 25, but may be selected from another material plate suitable for effectively shielding the magnetic force of the magnet 24 from affecting the surrounding elements except for the whirling magnet 21.

After preparation of the hexagonal water through the above procedure, the prepared hexagonal water will be discharged from the auxiliary container 7 into the cup 8 by opening the control valve 27 of the pipe 26 and served to a user as healthful potable water.

Turning to Fig. 11, there is shown a hexagonal water preparation device in accordance with the second embodiment of the present invention. In this second embodiment, the hexagonal water preparation device is characterized in that it uses neither the auxiliary water container 7 nor the water supply means "E", but the prepared hexagonal water is directly discharged from a water container differently from the first embodiment.

As shown in Fig. 11, the hexagonal water preparation device of the second embodiment includes a casing 52 which is placed in a side of the interior of the cooling chamber (see Fig. 2) of a refrigerator. The casing 52 is a right-angled hexahedral body which opens to the front, to the back and to the top. The water container 51 is placed in the upper section of the casing 52. The top of the casing 52 is covered with a detachable lid 37 for preventing introduction of impurities such as dust into the container 51 when moving the container 51. A permanent magnet 11 a coated with synthetic resin such as plastic is rotatably coupled to a predetermined portion of the interior surface of the lid 37.

The hexagonal water preparation device also includes water magnetizing means "F", water whirling means "G" and hexagonal water discharging means "H". The water magnetizing means "F" for magnetizing the water of the container 51 is exteriorly placed about the opposed sides of the container 51. The water whirling means "G" is adapted for giving a velocity to the water of the container 51 and for promoting magnetization of the water of the container 51 in the same manner as that described for the first embodiment. The hexagonal water discharging means "H" is provided on the container 51 and discharges the hexagonal water from the container 51.

The water magnetizing means "F', the water whirling means "G" and the hexagonal water discharging means "H" have the same constructions as those described for the first embodiment and further explanation is thus not deemed necessary.

The hexagonal water preparation device of the second embodiment prepares the hexagonal water in accordance with the same theory as that described for the first embodiment. After preparation of the hexagonal water, the prepared hexagonal water will be discharged from the water container 51 by opening a water discharging control valve 27a of a water discharging pipe 26a extending from the water container 51 and served to a user as healthful potable water.

In Fig. 11, the reference numerals 12a and 13a denote permanent magnets of the magnetizing means "F", 20a denotes a center shaft, 21 a denotes a whirling magnet rotatably coupled to the center shaft 20a, 23a denotes a drive motor, 22a denotes a rotating shaft of the motor 23a, 24a denotes a drive permanent magnet coupled to the rotating shaft 22a, and the numeral 25a denotes an aluminum plate acting as magnetic force shielding means.

Turning to Fig. 12, there is shown in a sectional view a water container of a hexagonal water preparation device in accordance with the third embodiment of the present invention. In this third embodiment, the hexagonal water preparation device is characterized in that it uses neither the auxiliary water container 7 nor the water supply means "E", but the prepared hexagonal water is directly discharged from the water container differently from the first embodiment.

As shown in Figs. 12 and 13, the water container 51 a is placed in a side of the interior of the cooling chamber of a refrigerator. The water container 51 a is provided with a hexagonal water discharging mouth 44 on its top side. The top of the water container 51 a is covered with a detachable lid 37a for preventing introduction of impurities such as dust into the container 51 a when moving the container 51 a.

The water container 51 a also includes water magnetizing means "I". The water magnetizing means "I" has a magnet holder 37b provided on the interior surface of the lid 37a. A permanent magnet 38 is set in the magnet holder 37b. The water magnetizing means "I" also includes a center shaft 29. The shaft 29 has a top head provided by forming an annular groove in the upper section of the shaft 29 and is vertically extends upward from the bottom of the water container 51a. A whirling magnet 31 is rotatably fitted over the annular groove of the center shaft 29.

The hexagonal water preparation device of the third embodiment also includes water whirling means "J" for giving a velocity to the water primarily magnetized by the magnetizing means "I" of the water container 51 a and for promoting magnetization of the water and change of the water into the hexagonal water.

As shown in Fig. 14, the water whirling means "J" includes a drive motor 34 having a rotating shaft 33. A drive permanent magnet 35 is coupled to the top end of the rotating shaft 33 of the motor 34. Shielding means "K", such as an aluminum plate 36, for shielding the magnetic force of the drive permanent magnet 35 from affecting the surroundings except for the whirling magnet 31 is fitted over the rotating shaft 33 under the drive permanent magnet 35. Synthetic resin such as plastic is coated on both the permanent magnet 38 and the whirling magnet 31 in order to keep the magnets 38 and 31 from rusting.

The hexagonal water preparation device of the third embodiment prepares the hexagonal water in accordance with the same theory as that described for the first embodiment and further explanation for preparation of the hexagonal water is thus not deemed necessary. However, the operational effect of the device owing to the structural characteristic of the water container 51 a will be given hereinbelow.

On the interior bottom of the water container 51a, the whirling magnet 31 is coupled to the center shaft 29 such that the magnet 31 can be rotated about the center shaft 29 as described above. Therefore, when the drive permanent magnet 35 is rotated by the rotating force of the drive motor 34, there are generated magnetic attraction and magnetic repulsion between the whirling magnet 31 and the drive permanent magnet 35, so that the whirling magnet 31 is rotated and whirls the water of the water container 51 a at a predetermined velocity. At this time, there is formed a predetermined angle between the whirling water and the magnetic field of the permanent magnet 38 provided on the interior surface of the lid 37a, thus to form an optimal condition suitable for changing the molecular structure of the water into the hexagonal ring structure.

While the whirling magnet 31 is rotated due to the magnetic attraction and magnetic repulsion, the whirling magnet 31 is applied with upward thrusting force and intends to go up the shaft 29 so as to be separated from the shaft 29. However, the whirling magnet 31 is limited in its going-up motion by the top head of the shaft 29, so that the whirling magnet 31 is not separated from the shaft 29 but always affected by the magnetic force of the drive permanent magnet 35.

After preparation of the hexagonal water through the above procedure, the prepared hexagonal water may be directly discharged from the water container 51 a through the discharging mouth 44 provided on the top side of the container 51 a without using additional water discharging means and served to a user as healthful potable water.

In Figs. 12 and 13, the reference numeral 43 denotes a handle of the lid 37a of the water container 51 a.

In the first, second and third embodiments of the present invention, it should be understood that the hexagonal water preparation device may be placed in a freezing chamber of the refrigerator instead of the cooling chamber of the refrigerator without affecting the functioning of the invention.

Of course, when placing the hexagonal water preparation device in the freezing chamber instead of the cooling chamber, agitating means for agitating the water will be additionally provided in the device in order to agitate the water and to prevent freezing of the water.

In addition, the hexahedral configuration of each main water container 5 of the first embodiment may be changed into the configuration of Fig. 6.

Turning to Fig. 15, there is shown in a sectional view a hexagonal water preparation device in accordance with the fourth embodiment of the present invention. In this fourth embodiment, the hexagonal water preparation device is characterized in that it is equipped in a conventional water cooling/heating apparatus differently from the above first to third embodiments.

In the water cooling/heating apparatus shown in Fig. 15, a water bottle 64 is upset and detachably laid on the top of a main body 61 of the apparatus, so that the mouth of the bottle 64 is fitted to a water inlet of the top of the body 61. A water reservoir 67 made of an excellent thermal conduction material such as aluminum is placed in the upper section of the interior of the main body 61, so that the reservoir 67 is connected to the upset water bottle 64.

The hexagonal water preparation device equipped in the above water cooling/heating apparatus includes a cold water container 62, which container is made of, for example, nonferrous metal and placed in the interior of the water reservoir 67. Provided under the cold water container 62 is a hot water container 63. A cap 62a having a plurality of holes (not shown) is placed between the cold water container 62 and the hot water container 63. Therefore, the water of the upset water bottle 64 will be introduced into the hot water container 63 through the cold water container 62.

The cold water container 62 and the hot water container 63 are provided with hexagonal water discharging means "P". The hexagonal water discharging means "P" is exteriorly provided in the lower sections of the containers 62 and 63.

The hexagonal water discharging means "P" includes a cold water pipe 65 extending from the cold water container 62 to the outside of the main body 61, and a hot water pipe 66 extending from the hot water container 63 to the outside of the main body 61. The cold water pipe 62 and the hot water pipe 63 are provided with water discharging control valves 71 respectively. A cold water port 65a and a hot water port 66a are provided on the ends of the cold water pipe 62 and of the hot water pipe 63 respectively.

The hexagonal water preparation device of the fourth embodiment also includes water cooling means "L" for cooling the water of the cold water container 62 so as to provide cold water. Water heating means "M" for heating the water of the hot water container 63 and for providing hot water is provided for the hot water container 63. The hexagonal water preparation device further includes water magnetizing means "N" for magnetizing the cold water of the cold water container 62 and for changing the water into the hexagonal water.

As shown in Fig. 16, the cooling means "L" includes a compressor 68 which is placed in a lower section of the interior of the main body 61. A refrigerant pipe 69 extending from the compressor 68 is arranged between the wall of the main body 61 and the water reservoir 67 defining the cold water container 62 therein. The cooling means "L" also includes a radiating pipe 70 exteriorly arranged on the rear wall of the main body 61.

The heating means "M" is an electric heater 75 which is interiorly placed on the bottom of the hot water container 63. The heater 75 is coated with aluminum.

The water magnetizing means "N" includes a first magnet 81 which is vertically provided on a side of the interior surface of the top wall of the cold water container 62. In addition, a second magnet 82 is placed about the cold water container 62. The magnetizing means "N" also includes a center shaft 62a. The shaft 62a has a top head provided by forming an annular groove in the upper section of the shaft 62a and is vertically extends upward from the bottom of the cold water container 62. A whirling magnet 83 is rotatably fitted over the annular groove of the center shaft 62a. Synthetic resin such as plastic is coated on both the first magnet 81 and the whirling magnet 83 in order to keep the magnets 81 and 83 from rusting.

The hexagonal water preparation device further includes a water whirling means "O" which is placed under the cold water container 62. The whirling means "O" is adapted for giving a velocity to the water of the cold water container 62 partially magnetized by the magnetizing means "N" and for whirling the water at the whirling velocity and for promoting the molecular structural change of the water into the hexagonal ring structure.

The whirling means "O" includes a drive motor 85, which drive motor 85 is placed under the cold water container 62 and has a rotating shaft 84. A drive rotating magnet 86 is coupled to the top end of the rotating shaft 84 of the motor 85.

A cup stand 73 is provided in the outside of the main body 61 under the hexagonal water discharging means "P". Placed on the cup stand 73 is a cup 74 for getting the cold water or the hot water therein.

In this fourth embodiment, it is preferred to make the cold water container 62 using nonferrous metal for effectively conducting the magnetic force of the drive rotating magnet 86 to the whirling magnet 83 placed in the cold water container 62. Of course, it should be understood that the positions of the first and second magnets 81 and 82 for magnetizing the water of the cold water container 62 as well as the positions of the whirling magnet 83 are not limited to the positions shown in Fig. 15, but may be placed on other positions suitable for magnetizing the water of the cold water container 62 using their magnetic forces.

The operational effect of the above hexagonal water preparation device of the fourth embodiment will be described hereinbelow.

When the water bottle 64 charged with water is upset and laid on the top of the main body, so that the mouth of the bottle 64 is connected to a predetermined position of the top of the main body 61, the water of the upset water bottle 64 is naturally introduced into the hot water container 63 by way of the cold water container 62. With the above structure, the cold water container 62 will be charged with the water after the hot water container 63 has been charged with the water.

When the cold water container 62 has been charged with the water, the cooling means "L" is driven, so that high pressure liquid refrigerant is outputted from the compressor 68 and passes through the refrigerant pipe 69 surrounding the cold water container 62. While the liquid refrigerant passes through the refrigerant pipe 69 surrounding the cold water container 62, the liquid refrigerant evaporates and absorbs the heat from the water of the cold water container 62 due to latent heat of vaporization, thus to cool the water of the cold water container 62.

On the other hand, when starting the heating means "M", the water of the hot water container 63 is heated by the electric heater 75 to a desired temperature.

When starting the drive motor 85 under the condition the cold water container 62 is charged with the water, the drive rotating magnet 86 coupled to the rotating shaft 84 of the motor 85 is rotated by the rotating force of the motor 85. As a result of rotation of the drive rotating magnet 86, there are generated magnetic attraction and magnetic repulsion between the whirling magnet 83 and the drive rotating magnet 86. The whirling magnet 83 is, therefore, rotated about the center shaft 62a in the water of the cold water container 62 and whirls the water at a velocity in the cold water container 62.

At this time, the whirling magnet 83 is applied with upward thrusting force and intends to go up the shaft 62a so as to be separated from the shaft 62a due to the magnetic attraction and the magnetic repulsion. However, the whirling magnet 83 is limited in its going-up motion by the top head of the shaft 62a, so that the whirling magnet 83 is not separated from the shaft 62a but always affected by the magnetic force of the drive rotating magnet 86.

Here, in the initial rotating stage, the water of the cold water container 62 whirls at a low velocity due to the intrinsic viscosity of the water. However, when the water of the cold water container 62 whirls at a high velocity, the angles between the whirling water and the magnetic fields of the first and second magnets 81 and 82 placed in the interior of and in the exterior of the cold water container 62 respectively will be closer to the right angle. In this case, the water is more easily magnetized and more easily changed into the hexagonal water, which hexagonal water will be discharged from the container 62 through the cold water pipe 65 when served as healthful potable water.

When serving either the cold hexagonal water prepared through the above magnetizing procedure or the hot water, either the cold hexagonal water or the hot water may be discharged from water container 62 or 63 and gotten in the cup 74 on the cup stand 73 by handling the hexagonal water discharging means "P" and served to a used as healthful potable water.

As described above, a device for preparation of hexagonal water in accordance with the invention is equipped in a conventional home appliance, such as a refrigerator or a water cooling/heating apparatus, thus to more readily prepare and serve the healthful hexagonal water and to promote human health, for example, prevention of geriatric diseases such as cancers, constipation, diabetes and gastroenteric trouble.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A device for preparation of hexagonal water comprising:
a holder placed in a side section of the interior of a cooling chamber of a refrigerator, said holder opening to the front, to the back and to the top;
at least one main water container placed in an upper section of the interior of said holder, said main water container having a detachable lid;
an auxiliary water container for containing therein water supplied from the main water container, said auxiliary water container being placed under the main water container;
means for magnetizing the water of said main water container and for making magnetized water, said magnetizing means being placed between said holder and opposed sides of said main water container;
means for supplying the water from the main water container to the auxiliary water container when the main water container is set on the auxiliary water container;
means for whirling the magnetized water of the main water container by giving a velocity to said magnetized water and for promoting change of molecular structure of the water into a hexagonal ring structure, said whirling means being placed on the bottom of said holder; and
means for discharging the hexagonal water from the auxiliary water container, said discharging means being provided on a side wall of the auxiliary water container.

2. The hexagonal water preparation device according to claim 1, wherein a rod type permanent magnet for magnetizing the water of the main water container is coupled to a predetermined position of the bottom surface of said detachable lid of the main water container.

3. The hexagonal water preparation device according to claim 1, wherein said magnetizing means includes:
at least one permanent magnet placed between a side wall of the main container and the holder; and
a whirling magnet interiorly rotatably coupled to the bottom of said main water container, said whirling magnet having at least one magnetic pole.

4. The hexagonal water preparation device according to claim 1, wherein said water supply means includes:
at least one cock movably fitted into a shaft hole formed on a predetermined position of the bottom of the main water container, so that the cock goes up and down under the guide of said shaft hole and selectively opens a plurality of water outlets circularly provided about said shaft hole;
a biasing member fitted over a shank of said cock in order for biasing said cock downward;
a water inlet provided on a predetermined position of said auxiliary water container and communicating with said water outlets of the main water container; and
a pushing rod extending upward from the bottom of the auxiliary water container and cooperating with said cock.

5. The hexagonal water preparation device according to claim 1, wherein said whirling means includes:
a center shaft provided on the bottom of said main water container;
a whirling magnet rotatably coupled to said center shaft, said whirling magnet having at least one magnetic pole;
a drive motor placed under said main water container;
a rotating shaft coupled to the top of said drive motor, said rotating shaft being rotated by rotating force of the drive motor; and
a drive permanent magnet coupled to said rotating shaft of the motor and rotating said whirling magnet due to magnetic attraction and magnetic repulsion generated between said whirling magnet and said drive permanent magnet, said drive permanent magnet having at least one magnetic pole.

6. The hexagonal water preparation device according to claim 3 wherein both the rod type permanent magnet and the whirling magnet are coated with synthetic resin so as to be kept from rusting.

7. The hexagonal water preparation device according to claim 5, wherein said center shaft has a top head for prevention of thrusting separation of the whirling magnet from said center shaft.

8. The hexagonal water preparation device according to claim 5, wherein said rotating shaft of the drive motor is provided with means for shielding magnetic force of said drive permanent magnet from affecting the surroundings except for said whirling magnet.

9. The hexagonal water preparation device according to claim 8, wherein said shielding means is an aluminum plate fitted over the rotating shaft of the drive motor under the drive permanent magnet.

10. A device for preparation of hexagonal water comprising:
a casing placed in a side section of the interior of a cooling chamber of a refrigerator;
a detachable lid covering the top of said casing, said lid having a permanent magnet rotatably coupled to a predetermined portion of the bottom surface of said lid;
a water container placed in said casing;
means for magnetizing the water of said water container so as to make magnetized water, said magnetizing means being placed in the outside of opposed sides of said water container;
means for whirling the magnetized water of the water container by giving a velocity to said magnetized water and for promoting magnetization of the water; and
means for discharging the hexagonal water from the water container, said discharging means being provided on a side wall of the water container.

11. The hexagonal water preparation device according to claim 10, wherein said magnetizing means includes:
at least one permanent magnet placed between a side wall of the water container and the casing; and
a whirling magnet interiorly rotatably coupled to the bottom of said water container, said whirling magnet having at least one magnetic pole.

12. The hexagonal water preparation device according to claim 11, wherein both the permanent magnet and the whirling magnet are coated with synthetic resin so as to be kept from rusting.

13. The hexagonal water preparation device according to claim 10, wherein said whirling means includes:
a center shaft provided on the bottom of said water container;
a whirling magnet rotatably coupled to said center shaft, said whirling magnet having at least one magnetic pole;
a drive motor placed under said water container;
a rotating shaft coupled to the top of said drive motor, said rotating shaft being rotated by rotating force of the drive motor; and
a drive permanent magnet coupled to said rotating shaft of the motor and rotating said whirling magnet due to magnetic attraction and magnetic repulsion generated between said whirling magnet and said drive permanent magnet, said drive permanent magnet having at least one magnetic pole.

14. The hexagonal water preparation device according to claim 13, wherein said center shaft has a top head for prevention of thrusting separation of the whirling magnet from said center shaft.

15. The hexagonal water preparation device according to claim 13, wherein said rotating shaft of the drive motor is provided with means for shielding magnetic force of said drive permanent magnet from affecting the surroundings except for said whirling magnet.

16. A device for preparation of hexagonal water comprising:
a water container placed in a side section of the interior of a cooling chamber of a refrigerator;
a detachable lid covering the top of said water container;
a hexagonal water discharging mouth provided on a top side of said water container;
a magnet holder provided on the bottom surface of said detachable lid;
means for magnetizing the water of said water container and for making, magnetized water, said magnetizing means being interiorly provided on the bottom of said water container; and
means for whirling the magnetized water of the water container by giving a velocity to said magnetized water and for promoting change of molecular structure of the water into hexagonal ring structure.

17. The hexagonal water preparation device according to claim 16, wherein a permanent magnet is set in said magnet holder.

18. The hexagonal water preparation device according to claim 16, wherein said magnetizing means includes:
a permanent magnet provided in said magnet holder of the lid; and
a whirling magnet interiorly rotatably coupled to the bottom of said water container, said whirling magnet having at least one magnetic pole.

19. The hexagonal water preparation device according to claim 18, wherein both the permanent magnet and the whirling magnet are coated with synthetic resin so as to be kept from rusting.

20. The hexagonal water preparation device according to claim 16, wherein said whirling means includes:
a center shaft provided on the bottom of said water container;
a whirling magnet rotatably coupled to said center shaft, said whirling magnet having at least one magnetic pole;
a drive motor placed under said water container;
a rotating shaft coupled to the top of said drive motor, said rotating shaft being rotated by rotating force of the drive motor; and
a drive permanent magnet coupled to said rotating shaft of the motor and rotating said whirling magnet due to magnetic attraction and magnetic repulsion generated between said whirling magnet and said drive permanent magnet, said drive permanent magnet having at least one magnetic pole.

21. The hexagonal water preparation device according to claim 20, wherein said center shaft has a top head for prevention of thrusting separation of the whirling magnet from said center shaft.

22. The hexagonal water preparation device according to claim 20, wherein said rotating shaft of the drive motor is provided with means for shielding magnetic force of said drive permanent magnet from affecting the surroundings except for said whirling magnet.

23. A device for preparation of hexagonal water comprising:
a cold water container placed in a predetermined section of the interior of a home appliance;
means for cooling water of said cold water container and for making cold water;
means for magnetizing the water supplied from a water bottle detachably set on the top of said home appliance to said cold water container, thus to make magnetized water and to change molecular structure of the water into a hexagonal ring structure;
means for whirling the magnetized water of the cold water container by giving a velocity to said magnetized water and for promoting change of the molecular structure of the water into the hexagonal ring structure, said whirling means being provided on the bottom of said cold water container; and
hexagonal water discharging means provided on a lower side section of said cold water container.

24. The hexagonal water preparation device according to claim 23, wherein said magnetizing means includes:
a permanent magnet provided in the interior or in the exterior of said cold water container; and
a whirling magnet interiorly rotatably coupled to the bottom of said cold water container, said whirling magnet having at least one magnetic pole.

25. The hexagonal water preparation device according to claim 24, wherein both the permanent magnet and the whirling magnet are coated with synthetic resin so as to be kept from rusting.

26. The hexagonal water preparation device according to claim 23, wherein said whirling means includes:
a center shaft provided on the bottom of said cold water container;
a whirling magnet rotatably coupled to said center shaft, said whirling magnet having at least one magnetic pole;
a drive motor placed under said cold water container;
a rotating shaft coupled to the top of said drive motor, said rotating shaft being rotated by rotating force of the drive motor; and
a drive rotating magnet coupled to said rotating shaft of the motor and rotating said whirling magnet due to magnetic attraction and magnetic repulsion generated between said whirling magnet and said drive permanent magnet, said drive permanent magnet having at least one magnetic pole.

27. The hexagonal water preparation device according to claim 26, wherein said center shaft has a top head for prevention of thrusting separation of the whirling magnet from said center shaft.

28. The hexagonal water preparation device according to claim 23, wherein said cold water container is made of nonferrous metal for effectively conducting magnetic force of said drive rotating magnet to said whirling magnet placed in the cold water container.

29. The hexagonal water preparation device according to claim 23, wherein said hexagonal water discharging means includes:
a cold water pipe extending from the cold water container to the outside of said home appliance;
a water discharging control valve provided on a predetermined portion of said cold water pipe; and
a water port provided on the outside end of said cold water pipe.
